(19) Europäisches Patentamt
European Patent Office
Office européen des brevets

(11) Veröffentlichungsnummer: **0 678 532 A1**

# (12) EUROPÄISCHE PATENTANMELDUNG

(21) Anmeldenummer: **94118850.0**

(22) Anmeldetag: **30.11.94**

(51) Int. Cl.[6]: **C08F 285/00**, C08L 51/00

(30) Priorität: **09.12.93 DE 4342048**

(43) Veröffentlichungstag der Anmeldung:
**25.10.95 Patentblatt 95/43**

(84) Benannte Vertragsstaaten:
**AT BE CH DE ES FR GB IT LI NL**

(71) Anmelder: **BASF AKTIENGESELLSCHAFT**
**D-67056 Ludwigshafen (DE)**

(72) Erfinder: **Niessner, Norbert, Dr.**
**Buhl'scher Hof 10**
**D-67159 Friedelsheim (DE)**
Erfinder: **Seitz, Friedrich, Dr.**
**Von-Wieser-Strasse 1**
**D-67159 Friedelsheim (DE)**

## (54) Dreistufige Propfcopolymerisate und solche enthaltende thermoplastische Formmassen mit hoher Zähigkeit.

(57) Pfropfcopolymerisate, erhältlich durch
(A) Polymerisation von 25 bis 60 Gew.-% einer Mischung, bestehend im wesentlichen aus
(a1) 70 bis 99,9 Gew.-% eines $C_1$-$C_{18}$-Alkylesters der Acrylsäure, wobei der Alkylrest einfach mit einer Phenyl- oder Phenoxygruppe substituiert sein kann,
(a2) 0,1 bis 10 Gew.-% eines polyfunktionellen Monomeren und
(a3) 0 bis 29,9 Gew.-% eines von (a1) und (a2) verschiedenen, damit copolymerisierbaren ethylenisch ungesättigten Monomeren
in Gegenwart von 5 bis 25 Gew.-% eines vernetzten Siliconkautschuks,
und
(B) Polymerisation von 30 bis 50 Gew.-% einer Mischung, bestehend im wesentlichen aus
(b1) 50 bis 100 Gew.-% einer Styrolverbindung der allgemeinen Formel (I)

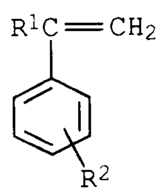

I

in der $R^1$ und $R^2$ unabhängig voneinander für Wasserstoff, $C_1$-$C_8$-Alkyl oder mit $C_1$-$C_4$-Alkyl bis zu dreifach substituiertes Phenyl bedeuten und/oder eines $C_1$-$C_8$-Alkylesters der Methacryl- oder Acrylsäure, und
(b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether,
in Gegenwart des Pfropfcopolymerisates (A).

EP 0 678 532 A1

Die vorliegende Erfindung betrifft Pfropfcopolymerisate, erhältlich durch

(A) Polymerisation von 25 bis 60 Gew.-% einer Mischung, bestehend im wesentlichen aus

(a1) 70 bis 99,9 Gew.-% eines $C_1$-$C_{18}$-Alkylesters der Acrylsäure, wobei der Alkylrest einfach mit einer Phenyl- oder Phenoxygruppe substituiert sein kann,

(a2) 0,1 bis 10 Gew.-% eines polyfunktionellen Monomeren und

(a3) 0 bis 29,9 Gew.-% eines von (a1) und (a2) verschiedenen, damit copolymerisierbaren ethylenisch ungesättigten Monomeren

in Gegenwart von 5 bis 25 Gew.-% eines vernetzten Siliconkautschuks,

und

(B) Polymerisation von 30 bis 50 Gew.-% einer Mischung, bestehend im wesentlichen aus

(b1) 50 bis 100 Gew.-% einer Styrolverbindung der allgemeinen Formel (I)

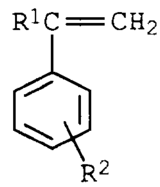

I

in der $R^1$ und $R^2$ unabhängig voneinander für Wasserstoff, $C_1$-$C_8$-Alkyl oder mit $C_1$-$C_4$-Alkyl bis zu dreifach substituiertes Phenyl bedeuten und/oder eines $C_1$-$C_8$-Alkylesters der Methacryl- oder Acrylsäure, und

(b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether,

in Gegenwart des Pfropfcopolymerisates (A).

Des weiteren betrifft die Erfindung die erfindungsgemäßen Pfropfcopolymerisate enthaltende thermoplastische Formmassen, Verfahren zur Herstellung der erfindungsgemäßen Pfropfcopolymerisate und thermoplastische Formmassen, die Verwendung der erfindungsgemäßen Pfropfcopolymerisate zur Herstellung von thermoplastischen Formmassen und Formkörpern, die Verwendung der erfindungsgemäßen Formmassen zur Herstellung von Formkörpern sowie Formkörper, erhältlich aus den erfindungsgemäßen Pfropfcopolymerisaten und thermoplastischen Formmassen.

Pfropfcopolymerisate, enthaltend im wesentlichen einen Kern aus einem Silikonkautschuk, einer ersten Hülle auf der Basis eines Alkylesters und einer äußeren Hülle auf der Basis eines harzbildenden Monomers, sind beispielsweise aus der EP-A 246,537 bekannt. Nachteilig ist jedoch, daß die Kältezähigkeit bei daraus hergestellten Formmassen und Formkörpern unbefriedigend ist.

Problematisch ist der in den Beispielen genannte hohe Siliconkautschuk-Anteil der Pfropfkautschuke, da Siliconkautschuk im Vergleich zu den übrigen Einsatzstoffen ein sehr hohes Preisniveau hat.

Da der verwendete Siliconkautschuk eine sehr tiefe Glasübergangstemperatur $T_g$ von -120 °C besitzt (s. DE 25 39 572; im Gegensatz zu Butadienkautschuk mit -80 °C oder Acrylatkautschuk mit -40 °C, s. EP 62901) war zu erwarten, daß mit steigendem Anteil an Siliconkautschuk die Kältezähigkeit zunimmt.

Aufgabe der vorliegenden Erfindung war es daher, Pfropfcopolymerisate, die zu thermoplastischen Formmassen und/oder Formkörpern verarbeitet werden können, bereitzustellen, wobei die daraus herstellbaren thermoplastischen Formmassen und Formkörper hohe Kältezähigkeitswerte bei niedrigem Siliconkautschukanteil aufweisen.

Demgemäß wurden die eingangs definierten Pfropfcopolymerisate gefunden.

Des weiteren wurden die erfindungsgemäßen Pfropfcopolymerisate enthaltende thermoplastische Formmassen, Verfahren zur Herstellung der erfindungsgemäßen Pfropfcopolymerisate und thermoplastische Formmassen, die Verwendung der erfindungsgemäßen Pfropfcopolymerisate zur Herstellung von thermoplastischen Formmassen und Formkörpern, die Verwendung der erfindungsgemäßen Formmassen zur Herstellung von Formkörpern, erhältlich aus dem erfindungsgemäßen Pfropfcopolymerisaten und thermoplastischen Formmassen, gefunden.

Geeignete vernetzte Siliconkautschuke zur Bildung des erfindungsgemäßen Kerns sind im allgemeinen vernetzte Siliconkautschuke aus Einheiten der allgemeinen Formeln $R_2SiO$, $RSiO_{3/2}$, $R_3SiO_{1/2}$ und $SiO_{2/4}$, wobei R einen einwertigen Rest, und im Fall von $R_3SiO_{1/2}$ ggf. auch OH, darstellt. Die Mengen der einzelnen Siloxaneinheiten sind dabei üblicherweise so bemessen, daß auf 100 Einheiten der Formel $R_2SiO$ 0 bis 10 Mol-Einheiten der Formel $RSiO_{3/2}$, 0 bis 1,5 Mol-Einheiten $R_3SiO_{1/2}$ und 0 bis 3 Mol-Einheiten

$SiO_{2/4}$ vorhanden sind.

R steht dabei im allgemeinen für $C_1$-$C_{18}$-Alkyl, vorzugsweise für $C_1$-$C_{12}$, besonders bevorzugt für $C_1$-$C_6$-Alkyl wie Methyl, Ethyl, n-Propyl, i-Propyl, n-Butyl, i-Butyl, sek-Butyl, tert.-Butyl, Pentyl oder Hexyl, insbesondere Methyl oder Ethyl oder $C_6$-$C_{10}$-Aryl wie Phenyl oder Naphthyl, insbesondere Phenyl, oder $C_1$-$C_{10}$-Alkoxy und Aryloxy wie Methoxy, Ethoxy oder Phenoxy, vorzugsweise Methoxy, oder radikalisch angreifbare Gruppen wie Vinyl-, Allyl-, Acryl-, Acryloxy-, Methacryl-, Methacryloxyalkyl, Halogen- oder Mercaptogruppen, bevorzugt Vinyl- oder Mercapto-$C_1$-$C_{10}$-alkylreste, insbesondere Mercaptopropyl, Vinyl und Methacryloxypropyl.

In einer besonderen Ausführungsform setzt man Siliconkautschuke ein, bei denen mindestens 80 % aller Reste R Methylreste sind. Des weiteren sind Siliconkautschuke bevorzugt, in denen R für Methyl und Ethyl steht.

In einer weiteren Ausführungsform setzt man Siliconkautschuke ein, die die oben genannten radikalisch angreifbaren Gruppen in Mengen im Bereich von 0,01 bis 10, bevorzugt von 0,2 bis 2 Mol-%, bezogen auf alle Reste R, enthalten. Solche Siliconkautschuke sind beispielsweise in der EP-A 260 558 und in der EP-A 492 376 beschrieben.

Des weiteren kann man die in der DE-A 25 39 572 beschriebenen Siliconkautschuke als Harze einsetzen, oder solche, die aus der EP-A 370 347 bekannt sind.

Den Kern setzt man erfindungsgemäß in einer Menge im Bereich von 5 bis 25, bevorzugt von 6 bis 20, besonders bevorzugt von 10 bis 15 Gew.-%, bezogen auf die Gesamtmenge an Pfropfcopolymerisat ein.

Die Komponente (A) ist erfindungsgemäß eine Mischung aus im wesentlichen

(a1) 70 bis 99,9 Gew.-%, vorzugsweise 75 bis 99,5, besonders bevorzugt 80 bis 99 Gew.-% eines $C_1$-$C_{18}$-Alkylesters der Acrylsäure, wobei der Alkylrest einfach mit einer Phenyl- oder Phenoxygruppe substituiert sein kann,

(a2) 0,1 bis 10 Gew.-%, vorzugsweise 0,5 bis 5, besonders bevorzugt 1 bis 4 Gew.-% eines polyfunktionellen Monomeren, und

(a3) 0 bis 29,9 Gew.-%, vorzugsweise 0 bis 24,5, besonders bevorzugt 0 bis 19 Gew.-% eines von (a1) und (a2) verschiedenen, damit copolymerisierbaren ethylenisch ungesättigten Monomeren.

Als $C_1$-$C_{18}$-Alkylester der Acrylsäure (Komponente (a1)) verwendet man bevorzugt die $C_2$-$C_8$-Alkylester wie Ethyl-, n-Propyl-, i-Propyl, n-Butyl-, Isobutyl-, tert.-Butyl-, sek.-Butyl, Pentyl-, Hexyl-, Heptyl-, N-Octyl-, 2-Ethylhexylacrylat, besonders bevorzugt Ethyl, n-Propyl-, n-Butyl- und 2-Ethylhexylacrylat. Des weiteren können die $C_1$-$C_{18}$-Alkylester mit einer Phenyl- oder Phenoxygruppe substituiert sein, bevorzugt Phenyl-$C_1$-$C_4$-alkylester wie Benzylacrylat, Phenylethyl-, Phenylpropyl- oder Phenoxyethylacrylat. Die substituierten $C_1$-$C_{18}$-Alkylester können auch im Gemisch mit unsubstituierten $C_1$-$C_{18}$-Alkylestern der Acrylsäure eingesetzt werden, wobei man bevorzugt mindestens einen $C_1$-$C_{18}$-Alkylester der Acrylester einsetzt.

Als polyfunktionelles Monomer (Komponente (a2)) eignen sich beispielsweise vinylisch ungesättigte Verbindungen mit wenigstens zwei Doppelbindungen wie

Vinylbenzole wie Divinylbenzol und Trivinylbenzol;

Triallylcyanurat und Triallylisocyanurat;

Diallylmaleat, Diallylfumarat und Diallylphthalat, die üblicherweise vernetzend wirken.

Des weiteren eignen sich nach bisherigen Beobachtungen pfropfaktiv und gegebenenfalls vernetzend wirkende ungesättigte Monomere, die Epoxi-, Hydroxi-, Carboxyl-, Amino- oder Säureanhydridgruppen tragen, wie Hydroxi-$C_1$-$C_6$-alkylmeth- und Hydroxi-$C_1$-$C_6$-alkylacrylate, bevorzugt Hydroxiethylmeth-, Hydroxiethylacrylat und Hydroxipropylmeth- und Hydroxipropylacrylat.

Als besonders geeignete Monomere für die Komponente (a2) haben sich die Tricyclodecenylacrylate Ia und Ib

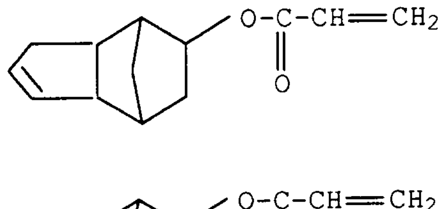

Ia

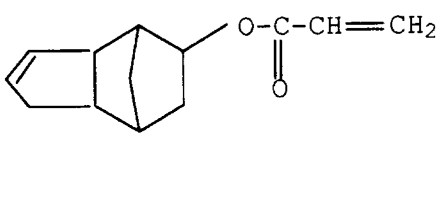

Ib

erwiesen (s. DE-A 1,260,135).

Als von den Komponenten (a1) und (a2) verschiedene, mit diesen Komponenten jedoch copolymerisierbare ethylenisch ungesättigte Monomere, (Komponente (a3)), verwendet man bevorzugt vinylaromatische Monomere wie Styrol, α-Methylstyrol, p-Methylstyrol, tert.-Butylstyrol, 1,1-Diphenylethylen, Monochlorstyrol und Vinyltoluol, besonders bevorzugt Styrol;
Acrylnitril und Methacrylnitril, bevorzugt Acrylnitril;
$C_1$-$C_4$-Ester der Acryl- und Methacrylsäure wie Methylmethacrylat ("MMA"), Ethylmethacrylat, n-, i-Propylmethacrylat, n-Butylmethacrylat, Isobutylmethacrylat, sek.-Butylmethacrylat und tert.-Butylmethacrylat, wobei Methylmethacrylat besonders bevorzugt ist, sowie Mischungen dieser Monomere;
Methylacrylat ("MA"), Ethylacrylat, Propylacrylat, n-Butylacrylat, Isobutylacrylat, sek.-Butylacrylat und tert.-Butylacrylat, wobei Methylacrylat besonders bevorzugt ist, sowie Mischungen dieser Monomeren;
$C_5$-$C_8$-Cycloalkylester der Acryl- und Methacrylsäure wie Cyclopentyl-, Cyclohexyl-, Cycloheptyl- und Cyclooctylacrylat, Cyclopentyl-, Cyclohexyl-, Cycloheptyl- und Cyclooctylmethacrylat, bevorzugt Cyclohexylmethacrylat;
Isobornylmethacrylat;
Maleinsäureimide, die am Imidstickstoffatom mit einer $C_1$-$C_6$-Alkylgruppe wie Methyl, Ethyl, n-, i-Propyl, n-, i-, sek.-, tert.-Butyl, Pentyl und Hexyl, substituiert sind, bevorzugt N-Methylmaleinsäureimid, sowie N-$C_6$-$C_{10}$-Aryl- oder N-$C_6$-$C_{20}$-Aryl-$C_1$-$C_4$-alkyl-substituierte Maleinsäureimide, wobei die Arylgruppen bis zu dreifach mit $C_1$-$C_4$-Alkyl substituiert sein können, wie N-Phenylmaleinimid und N-Tolylmaleinimid, bevorzugt N-Phenylmaleinimid;
Maleinsäureanhydrid sowie Maleinsäure-$C_1$-$C_6$-alkylester und Maleinsäure-di-($C_1$-$C_6$-alkyl)ester, bevorzugt Maleinsäureanhydrid;
Diene wie Butadien und Isopren, bevorzugt Butadien.

Die Glasübergangstemperatur der 1. Hülle (A) liegt üblicherweise unterhalb von 0 °C, bevorzugt unterhalb von -20 °C und besonders bevorzugt unterhalb von -30 °C (Die Glasübergangstemperatur wird z.B. mit Hilfe der DSC ermittelt; K.H. Illers; Makromol. Chem. 127, 1 (1969)).

Die Herstellung der 1. Hülle, (A), erfolgt in der Regel nach bekannten Polymerisationsverfahren wie Emulsions-, Masse-, Lösungs- oder Suspensionspolymerisation, bevorzugt in wäßriger Emulsion in Gegenwart einer wäßrigen Emulsion des Siliconkautschuks-Kerns (s. DE-PS 12 60 135).

Es können die üblichen Emulgatoren wie die Alkalimetallsalze von Alkyl- oder Alkylarylsulfonsäure, Alkylsulfate, Fettalkoholsulfonate, Salze höherer Fettsäuren mit 10 bis 30 C-Atomen oder Harzseifen für die Herstellung der Pfropfgrundlage über Emulsionspolymerisation verwendet werden. Vorzugsweise werden Natriumsalze von Alkylsulfonaten oder von Fettsäuren mit 10 bis 18 C-Atomen verwendet. Im allgemeinen werden Emulgatoren in Mengen von 0,1 bis 5 Gew.-%, bevorzugt von 0,5 bis 2 Gew.-%, bezogen auf das Gesamtgewicht der für die Herstellung der 1. Hülle (A) verwendeten Monomeren, eingesetzt.

Als Coemulgatoren können gewünschtenfalls nichtionische oder anionische Tenside eingesetzt werden. Nichtionische Coemulgatoren sind beispielsweise Polyoxyethylenderivate von Fettalkoholen oder Fettsäuren. Beispielhaft seien genannt: POE (3) - Laurylalkohol, (POE = Polyoxyethylen (x) mit x = Polymerisationsgrad), POE (20)-Oleylalkohol, POE (7)-Nonylphenol, POE (10)-Stearat. Im allgemeinen wird bei einem Wasser/Monomerverhältnis von 10 : 1 bis 0,7 : 1 gearbeitet.

Als Polymerisationsinitiatoren dienen üblicherweise Hydroperoxide, die gebräuchlichen Persulfate, sowie Redoxsysteme wie Hydroperoxid und Ascorbinsäure, gewünschtenfalls unter Zusatz von $Fe^{2+}$-Salzen und Komplexbildner. Die gebräuchlichen Redoxsysteme sind dem Fachmann bekannt. Die Menge an Initiatoren richtet sich in der Regel in bekannter Weise nach dem gewünschten Molekulargewicht und liegt üblicherweise im Bereich von 0,01 bis 1, bevorzugt von 0,05 bis 0,5 Gew.-%, bezogen auf das Gesamtgewicht der Monomeren.

Als Polymerisationshilfsstoffe verwendet man im allgemeinen die üblichen Puffersubstanzen wie Natriumhydrogencarbonat, Natriumpyrophosphat (mit denen pH-Werte zwischen 6 und 9 eingestellt werden können), sowie Molekulargewichtsregler wie Mercaptane, Terpinole oder dimeres α-Methylstyrol.

Die genauen Polymerisationsbedingungen, insbesondere Art, Dosierung und Menge des Emulgators werden üblicherweise innerhalb der oben angegebenen Bereiche im einzelnen so bestimmt, daß der erhaltene Latex des vernetzten Polymeren einen $d_{50}$-Wert im Bereich von 40 bis 2000 nm, bevorzugt von 60 bis 1000 nm, besonders bevorzugt im Bereich von 80 bis 800 nm besitzt.

Bei der Herstellung der 1. Hülle (A) in wäßriger Emulsion arbeitet man üblicherweise bei Temperaturen im Bereich von 20 bis 100, bevorzugt von 40 bis 80 °C.

Die Komponente (A) setzt man erfindungsgemäß in einer Menge im Bereich von 25 bis 60, bevorzugt von 30 bis 55, besonders bevorzugt von 35 bis 45 Gew.-%, bezogen auf die Gesamtmenge an Pfropfcopolymerisat, ein.

Die Komponente (B), 2. Hülle, ist erfindungsgemäß eine Mischung aus im wesentlichen

(b1) 50 bis 100 Gew.-%, vorzugsweise 55 bis 100, besonders bevorzugt 60 bis 90 Gew.-%, einer Styrolverbindung der allgemeinen Formel I

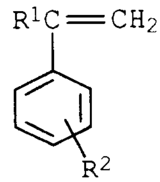

I

in der $R^1$ und $R^2$ unabhängig voneinander für Wasserstoff, $C_1$-$C_8$-Alkyl oder mit $C_1$-$C_4$-Alkyl bis zu dreifach substituiertes Phenyl bedeuten und/oder eines $C_1$-$C_8$-Alkylesters der Methacryl- oder Acrylsäure,

und/oder

eines $C_1$-$C_8$-Alkylesters der Methacryl- oder Acrylsäure, und

(b2) 0 bis 50 Gew.-%, bevorzugt 0 bis 40, besonders bevorzugt 10 bis 40 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether.

Als Styrolverbindung der allgemeinen Formel I (Komponente (b1)) setzt man vorzugsweise Styrol, $\alpha$-Methylstyrol, 1,1-Diphenylethylen sowie mit $C_1$-$C_8$-Alkyl kernalkylierte Styrole wie p-Methylstyrol oder tert.-Butylstyrol ein, besonders bevorzugt Styrol und $\alpha$-Methylstyrol.

Als $C_1$-$C_8$-Alkylester der Methacryl- oder Acrylsäure verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten und/oder Styrolverbindungen der allgemeinen Formel I.

Als Komponente (b2) setzt man erfindungsgemäß gewünschtenfalls ein Monomer ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren wie Vinylacetat oder Vinylpropionat, Acrylamid und Vinylmethylether, ein.

In einer bevorzugten Ausführungsform setzt man eine Mischung von Styrol und Acrylnitril (Molverhältnis üblicherweise im Bereich von 10 : 1 bis 1 : 1, bevorzugt von 5 : 1 bis 1 : 1), oder $\alpha$-Methylstyrol und Acrylnitril (Molverhältnis üblicherweise im Bereich von 10 : 1 bis 1 : 1, bevorzugt von 5 : 1 bis 1 : 1), oder Methylmethacrylat und Styrol (Molverhältnis üblicherweise im Bereich von 10 : 1 bis 1 : 1, bevorzugt von 5 : 1 bis 1 : 1), oder Methylmethacrylat alleine, d.h. keine Komponente (b2), ein.

Die Herstellung der 2. Hülle, (B), erfolgt in der Regel nach üblichen Polymerisationsverfahren wie Emulsions-, Masse-, Lösungs- oder Suspensionspolymerisation in Gegenwart des Pfropfcopolymerisates (A).

Es ist jedoch vorteilhaft, die Pfropfcopolymerisation von Komponente (B) auf das als Pfropfgrundlage dienende Polymerisat (A) wiederum in wäßriger Emulsion durchzuführen. Sie kann im gleichen System wie die Polymerisation der Pfropfgrundlage vorgenommen werden, wobei weiterer Emulgator und Initiator zugegeben werden können. Diese müssen mit den zur Herstellung der Hülle (A) verwendeten Emulgatoren bzw. Initiatoren nicht identisch sein. Emulgator, Initiator und Polymerisationshilfsstoffe können jeweils allein oder in Mischung zur Emulsion der Pfropfgrundlage (A) vorgelegt werden. Es kann jede mögliche Kombination von Vorlage und Zulauf einerseits und Initiator, Emulgator und Polymerisationshilfsmittel andererseits in Frage kommen. Die bevorzugten Ausführungsformen sind dem Fachmann bekannt. Das aufzupfropfende Monomergemisch kann dem Reaktionsgemisch auf einmal, absatzweise in mehreren Stufen oder auch kontinuierlich während der Polymerisation zugegeben werden.

Die erfindungsgemäßen Pfropfcopolymerisate weisen vorzugsweise eine mittlere Teilchengröße im Bereich von 0,1 bis 10, besonders bevorzugt von 0,1 bis 1 $\mu$m, auf.

Die Komponente (B) setzt man erfindungsgemäß in einer Menge im Bereich von 30 bis 50, bevorzugt 35 bis 45, besonders bevorzugt 35 bis 40 Gew.-%, bezogen auf die Gesamtmenge an Pfropfcopolymerisat,

ein.

Die so hergestellten erfindungsgemäßen Pfropfcopolymerisate können nach bekannten Verfahren aufgearbeitet werden, z.B. durch Koagulation der Latices mit Elektrolyten (Salze, Säuren, Basen), durch Erwärmung oder Ausfrieren, durch Ultraschall, durch Scherung oder durch Kombination dieser Methoden.

Die erfindungsgemäßen Pfropfcopolymerisate können für sich allein als Formmassen verwendet werden. Hierzu können sie beispielsweise durch Sprühtrocknung aufgearbeitet werden. Bevorzugt verwendet man die erfindungsgemäßen Pfropfcopolymerisate jedoch zur Abmischung mit Copolymerisat (C), um dessen Kältezähigkeit zu erhöhen. Zur Modifizierung geeignete Copolymerisate (C) sind erfindungsgemäß erhältlich durch Polymerisation einer Mischung bestehend im wesentlichen aus

(c1) 50 bis 100 Gew.-% einer Styrolverbindung der allgemeinen Formel I und/oder eines $C_1$-$C_8$-Alkylesters der Methacryl- oder Acrylsäure,

(c2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether,

(c3) 0 bis 90 Gew.-% eines Polycarbonats und

(c4) 0 bis 100 Gew.-% übliche Zusatzstoffe.

Die Komponenten (c1) und (c2) entsprechen den weiter oben genannten Komponenten (b1) und (b2).

Komponente (c1) setzt man erfindungsgemäß im Bereich von 50 bis 100, bevorzugt von 60 bis 90, besonders bevorzugt von 65 bis 81 Gew.-%, Komponente (c2) von 0 bis 50, bevorzugt von 10 bis 40, besonders bevorzugt von 19 bis 35 Gew.-%, ein.

Beispielhaft für die Komponenten (c1) und (c2) seien genannt:
Homo- und Copolymerisate aus einem vinylaromatischen Monomeren und einem polaren, copolymerisierbaren, ethylenisch ungesättigten Monomeren wie Polystyrol, Polymethylmethacrylat, Styrol-Acrylnitril-Copolymere, $\alpha$-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, $\alpha$-Methylstyrol-Acrylnitril-Methylmethacrylat-Copolymere, $\alpha$-Methylstyrol-Acrylnitril-tert.-Butylmethacrylat-Copolymere, Styrol-Acrylnitril-tert.-Butylmethacrylat-Copolymere.

Die genannten Copolymerisate entstehen beispielsweise häufig bei der Pfropfpolymerisation zur Herstellung der erfindungsgemäßen Pfropfcopolymerisate als Nebenprodukte, besonders dann, wenn große Mengen der Komponente (B) auf kleine Mengen der Komponente (A) gepfropft werden. Die Vinylpolymeren und (Meth)-Acrylpolymeren können nach bekannten radikalischen, anionischen und kationischen Polymerisationsverfahren hergestellt werden. Auch die bekannte Redoxpolymerisation oder die bekannte Polymerisation mit metallorganischen Mischkatalysatoren kann vorteilhaft sein.

Als erfindungsgemäße Komponente (c3) kann Polycarbonat (PC) allein oder in Mischung mit anderen der oben genannten Komponenten (c1) und (c2) eingesetzt werden.

Bevorzugte erfindungsgemäße Blendkomponenten sind beispielsweise Abmischungen aus Polycarbonat mit den vorstehend beschriebenen erfindungsgemäßen Pfropfcopolymerisaten und den Komponenten (c1) und (c2).

Üblicherweise beträgt hierbei der Anteil an den erfindungsgemäßen Pfropfcopolymerisaten 5 bis 95, bevorzugt 10 bis 90, besonders bevorzugt 20 bis 80 Gew.-%, der Anteil der Komponenten (c1) und (c2) (Summe c1 + c2) 5 bis 95, bevorzugt 10 bis 90, besonders bevorzugt 20 bis 80 Gew.-%, und der Anteil an Komponente (c3) 0 bis 90, bevorzugt 0 bis 80, besonders bevorzugt 0 bis 70 Gew.-%.

Geeignete Polycarbonate sind beispielsweise solche auf Basis von Diphenolen der allgemeinen Formel (II)

HO-Ar-A-Ar-OH (II)

in der

Ar unsubstituiertes oder bis zu dreifach mit $C_1$-$C_4$-Alkyl oder Halogen substituiertes Phenyl

A Einfachbindung, $C_1$-$C_3$-Alkylen, $C_2$-$C_3$-Alkyliden-, $C_3$-$C_6$-Cycloalkylidengruppen sowie -S- oder $-SO_2-$ bedeuten.

Bevorzugte Diphenole der allgemeinen Formel (II) sind beispielsweise Hydrochinon, Resorcin, 4,4'-Dihydroxybiphenyl, 2,2-Bis(4-hydroxyphenyl)-propan,
2,4-Bis-(4-hydroxyphenyl)-2-methylbutan,
1,1-Bis-(4-hydroxyphenyl)-cyclohexan. Besonders bevorzugt sind
2,2-Bis-(4-hydroxyphenyl)-propan und
1,1-Bis-(4-hydroxyphenyl)-cyclohexan.

Die Diphenole der allgemeinen Formel (II) sind an sich bekannt oder nach bekannten Verfahren herstellbar.

Die Diphenole der allgemeinen Formel (II) können sowohl einzeln als auch im Gemisch zur Herstellung der Polycarbonate verwendet werden.

Die geeigneten Polycarbonate können in bekannter Weise verzweigt sein, und zwar vorzugsweise durch den Einbau von 0,05 bis 2,0 Mol.-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 (gemessen als 0,5 gew.-%ige Lösungen der Polymere in Chloroform bei 23 °C) aufweisen. Dies entspricht mittleren Molekulargewichten $M_w$ (Gewichtsmittel) von 10.000 bis 200.000, vorzugsweise von 20.000 bis 80.000 g/mol.

Die Herstellung der Polycarbonate kann beispielsweise durch Umsetzung der Diphenole der allgemeinen Formel (II) mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten s. beispielsweise DE-OS 33 34 782).

Geeignete Kettenabbrecher sind beispielsweise Phenol, p-tert.-Butylphenol, aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenyl, 2-(3,5-dimethylheptyl)-phenol und 4-(3,5-Dimethylheptyl)-phenol.

Als Komponente (c3) können beispielsweise auch Polycarbonat-Polysiloxan-Blockcopolymere, Polycarbonat-Polyether-Blockcopolymere und Polycarbonat-Polyester-Blockcopolymere dienen.

Des weiteren sind als Komponente (c3) in der Regel auch aromatische Polyester und Polyestercarbonate einsetzbar.

Als Komponente (c4) können die erfindungsgemäßen thermoplastischen Formmassen als weitere Bestandteile übliche Zusatzstoffe enthalten.

Als solche seine beispielsweise genannt: Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform.

Die Zusatz- und Hilfsstoffe werden in üblichen Mengen, vorzugsweise in Mengen von bis zu 50 Gew.-%, bezogen auf das Gesamtgewicht der thermoplastischen Formmasse, eingesetzt. Verträgliche Kunststoffe können auch einen höheren Anteil ausmachen.

Neben den als Matrizes genannten Polymeren kann man die erfindungsgemäßen Pfropfcopolymerisate auch mit den folgenden Polymeren mischen:

Polyphenylenether, Polyamide, Polyester, Polyurethane, Polyethylenhomo- und copolymere, Polypropylenhomo- und copolymere, halogenierte Polyolefine wie Polyvinylchlorid, Polytetrafluorethylen und Derivate, weiterhin Polyoxymethylene, Polyetherketone, Polyethersulfone, Polysulfone.

In einer weiteren bevorzugten Ausführungsform mischt man die erfindungsgemäßen Pfropfcopolymerisate mit bekannten Kautschuk-modifizierten Kunststoffen, z.B. ABS oder ASA. ABS-- basierend auf Butadien-Pfropfkautschuken mit Styrol/Acrylnitrilcopolymer - und ASA-Formmassen - basierend auf Acrylat-Pfropfkautschuken mit Styrol/Acrylnitrilcopolymer - sind dem Fachmann bekannt und u.a. beschrieben in DE 12 60 135 und EP 62901.

Die erfindungsgemäßen thermoplastischen Formmassen werden in der Regel durch bekannte Methoden wie Extrusion, Spritzgießen, Schmelzepressen, Kneten etc. verarbeitet. Die auf diese Weise aufgeschmolzenen Gemische werden üblicherweise nach dem Erkalten zu Formkörpern verarbeitet (in der Regel durch Spritzguß) und anschließend mechanisch geprüft.

Die erfindungsgemäßen thermoplastischen Formmassen lassen sich nach den für die Thermoplastverarbeitung üblichen Verfahren, wie Extrusion und Spritzgießen, zu den verschiedenartigsten Formkörpern, wie Fensterprofilen, Gartenmöbeln, Booten, Schildern, Lampenabdeckungen, Automobilteilen und Kinderspielzeug verarbeiten. Die erfindungsgemäße thermoplastischen Formmassen eignen sich besonders zur Herstellung von Formkörpern, bei denen eine hohe Kältezähigkeit gefordert ist.

## Beispiele

Die Kerbschlagzähigkeit $a_K$ (Spritztemperatur/Prüftemperatur) (in kJ/m$^2$) wurden nach DIN 53 453 an bei 220, 250 und 280 °C gespritzten Normkleinstäben bei 23 °C, 0 °C und -20 °C Prüftemperatur gemessen.

Die Wärmeformbestätigkeit Vicat B 50 wurde nach DIN 54 460 bestimmt (in °C).

Der Volumenfließindex MVI (in ml/10 Minuten) wurde nach DIN 53 735 bei einer Temperatur von 200°C und einer Belastung von 21,6 kg bestimmt.

Bei der Angabe der mittleren Teilchengrößen handelt es sich in allen Fällen um das Gewichtsmittel der Teilchengrößen, die mittels einer analytischen Ultrazentrifuge entsprechend der Methode von W. Scholtan und H. Lange, Kolloid-Z. und Z.Polymere 250 (1972), Seiten 782 bis 796, bestimmt wurden. Die Ultrazentrifugenmessung liefert die integrale Massenverteilung des Teilchendurchmessers eine Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

1. Herstellung der Pfropfcopolymerisate A

1.1. Als Siliconemulsion (Dispersion) A1 wurde eine vernetzte Polydimethylsiloxan-Emulsion (hergestellt analog zu Beispiel 1 in der EP-A 492 376) eingesetzt: Feststoffgehalt (FG) : 17,4 %; 156 nm Teilchendurchmesser;
Viskosität 4,6 mPa*s; pH = 7; 3 % Vernetzungsgrad; 0,5 % Methacryloxypropyl-Funktionen.

1.2. Herstellung der 1. Hülle A2

1.2.1. Vorlage
Dispersion A1 (s. Tabelle 1) und Wasser wurden auf 60°C erwärmt und anschließend Kaliumpersulfat (KPS) zugegeben.

1.2.2. Zulauf
Innerhalb von 1,5 Stunden wurde ein Gemisch aus n-Butylacrylat (BA) und Acrylsäureester des Tricyclodecenylalkohols (DCPA) zugetropft.
Gleichzeitig wurde ein Gemisch aus Wasser und den Na-Salzen eines Gemisches von $C_{13}$- und $C_{14}$-Alkylsulfonsäuren (Seife) zugetropft. Die erhaltene Dispersion A2 wurde nicht isoliert.

1.3. Herstellung der 2. Hülle
Zur Dispersion A2 wurden 5,1 g Kaliumpersulfat zugegeben und 960 g Styrol und 320 g Acrylnitril innerhalb von 3 Stunden zugetropft. Es wurde 2 Stunden nachgerührt. Theoretischer Feststoffgehalt: 40,0 %.

Tabelle 1
Herstellung von Siloxan/Acrylat-Kautschuken
Alle Mengenangaben in g

| Versuch | 1 | 2 | 3 |
|---|---|---|---|
| **Vorlage** | | | |
| - Komponente A1 | 1839 | 3678 | 5517 |
| - Wasser | 3086 | 1575 | 255 |
| - KPS | 4,8 | 3,9 | 2,88 |
| **Zulauf** | | | |
| - BA | 1568 | 1254 | 941 |
| - DCPA | 32 | 26 | 19 |
| - Wasser | 212 | 206 | - |
| - Seife | 8 | 4 | - |
| **Analytik** | | | |
| Feststoffgehalt (%) | 39,5 | 39,7 | 39,6 |
| LD-Wert | 43 | 53 | 64 |
| Quellungs-index[1)] | 4,4 | 4,6 | 4,2 |
| Gelgehalt[1)] (%) | 96,3 | 93,4 | 84,5 |

[1)] Quellungsindex ist die Gewichtszunahme bei Quellung der Probe in tert.-Butylmethylether bei 23°C und 24 h.
Der Gelgehalt ist der nach obiger Quellung erhaltene unlösliche Anteil nach Abtrennung der löslichen Anteile.

Als Lichtdurchlässigkeit (LD; DIN 5036) oder Transmission bezeichnet man das Verhältnis des von einer Probe durchgelassenen Lichtes zur Intensität des einfallenden Lichtes. Sie wurde in Abhängigkeit von der Wellenlänge in einem Bereich von 400 bis 900 nm an einer 0,01 Gew.-% Feststoffgehalt enthaltenden Lösung in Wasser in einer 3 cm dicken Quarzküvette gemessen.

2. Vergleichsversuch 1 (V1, Silicon-Pfropfkautschuk)

In einem Glaskolben wurden 8333 g Dispersion A1 auf 60 °C erwärmt, 3,9 g Kaliumpersulfat zugegeben und ein Gemisch aus 725 g Styrol und 242 g Acrylnitril innerhalb von 3 Stunden zugetropft; 2 Stunden Nachreaktionszeit.

| | |
|---|---|
| Feststoffgehalt FG: | 25,7 % |
| LD-Wert: | 79 |
| Quellungsindex: | 3,9 |
| Gelgehalt: | 89,9 %. |

3. Vergleichsversuch 2 (V2, Acrylat-Pfropfkautschuk)

Hergestellt gemäß EP-B 6503, Sp. 12, Z. 54 bis Sp. 13, Z. 22.

Die Aufarbeitung der Kautschuke (Versuch 1 bis 3, V1 und V2) erfolgte wie in EP-B 6503, Sp. 13, Z. 16 bis 22 beschrieben.

4. Komponente B

Es wurde ein Lösungspolymerisat aus Styrol und Acrylnitril im Gewichtsverhältnis 65 : 35 und einer Viskositätszahl von 80 ml/g (gemessen bei 23 °C in einer 0,5 gew.-%igen Dimethylformamid (DMF)-Lösung) eingesetzt.

5. Herstellung der Abmischungen

Zunächst wurden die Kautschuke (Versuch 1, 2, 3, sowie V1 und V2) jedes für sich mit der in 4. beschriebenen Komponente B in einem Gewichtsverhältnis 1 : 1 gemischt und gemeinsam bei 250 °C auf einem Doppelschneckenextruder ZSK 30 der Firma Werner & Pfleiderer extrudiert und granuliert. Aus dem Granulat wurden bei 220, 250 und 280 °C Formkörper für die mechanische Prüfung hergestellt (Tabelle 2).

Tabelle 2

| Mechanische Daten der erfindungsgemäßen Formmassen | | | | | |
|---|---|---|---|---|---|
| Versuch | 1 | 2 | 3 | V1 | V2 |
| Vicat B50 (°C) | 88 | 87 | 87 | 92 | 87 |
| MVI (200/21,6) (ml/10min) | 5,6 | 4,6 | 4,4 | 2,8 | 3,9 |
| $a_k$ (kJ/m$^2$) (280/23) | 22 | 24 | 21 | 12 | 26 |
| (280/0) | 18 | 19 | 16 | 8 | 5 |
| (280/-20) | 17 | 17 | 14 | 8 | 3 |

**Patentansprüche**

1. Pfropfcopolymerisate, erhältlich durch
   (A) Polymerisation von 25 bis 60 Gew.-% einer Mischung, bestehend im wesentlichen aus
   (a1) 70 bis 99,9 Gew.-% eines $C_1$-$C_{18}$-Alkylesters der Acrylsäure, wobei der Alkylrest einfach mit einer Phenyl- oder Phenoxygruppe substituiert sein kann,
   (a2) 0,1 bis 10 Gew.-% eines polyfunktionellen Monomeren und
   (a3) 0 bis 29,9 Gew.-% eines von (a1) und (a2) verschiedenen, damit copolymerisierbaren ethylenisch ungesättigten Monomeren
   in Gegenwart von 5 bis 25 Gew.-% eines vernetzten Siliconkautschuks,
   und
   (B) Polymerisation von 30 bis 50 Gew.-% einer Mischung, bestehend im wesentlichen aus
   (b1) 50 bis 100 Gew.-% einer Styrolverbindung der allgemeinen Formel (I)

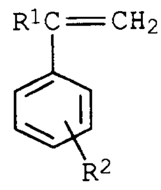

I

in der $R^1$ und $R^2$ unabhängig voneinander für Wasserstoff, $C_1$-$C_8$-Alkyl oder mit $C_1$-$C_4$-Alkyl bis zu dreifach substituiertes Phenyl bedeuten und/oder eines $C_1$-$C_8$-Alkylesters der Methacryl- oder Acrylsäure, und

(b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether,

in Gegenwart des Pfropfcopolymerisates (A).

**2.** Pfropfcopolymerisate gemäß Anspruch 1, dadurch gekennzeichnet, daß die Polymerteilchen eine mittlere Teilchengröße im Bereich von 0,1 bis 10 µm aufweisen.

**3.** Thermoplastische Formmasse, bestehend im wesentlichen aus 5 bis 95 Gew.-% eines Pfropfcopolymerisats gemäß den Ansprüchen 1 oder 2 und 95 bis 5 Gew.-% eines Copolymerisats (C) erhältlich durch Polymerisation einer Mischung, bestehend im wesentlichen aus

(c1) 50 bis 100 Gew.-% einer Styrolverbindung der allgemeinen Formel I und/oder eines $C_1$-$C_8$-Alkylesters der Methacryl- oder Acrylsäure,

(c2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether,

(c3) 0 bis 90 Gew.-% eines Polycarbonats und

(c4) 0 bis 100 Gew.-% übliche Zusatzstoffe.

**4.** Verfahren zur Herstellung der Pfropfcopolymerisate gemäß der Ansprüche 1 oder 2, dadurch gekennzeichnet, daß man

(A) 25 bis 60 Gew.-% einer Mischung, bestehend im wesentlichen aus

(a1) 70 bis 99,9 Gew.-% eines $C_1$-$C_{18}$-Alkylesters der Acrylsäure, wobei der Alkylrest einfach mit einer Phenyl- oder Phenoxygruppe substituiert sein kann,

(a2) 0,1 bis 10 Gew.-% eines polyfunktionellen Monomeren und

(a3) 0 bis 29,9 Gew.-% eines von (a1) und (a2) verschiedenen, damit copolymerisierbaren ethylenisch ungesättigten Monomeren,

in Gegenwart von 5 bis 25 Gew.-% eines vernetzten Siliconkautschuks polymerisiert und

(B) 30 bis 50 Gew.-% einer Mischung, bestehend im wesentlichen aus

(b1) 50 bis 100 Gew.-% einer Styrolverbindung der allgemeinen Formel (I)

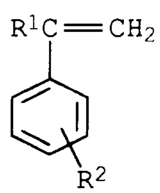

I

in der $R^1$ und $R^2$ unabhängig voneinander für Wasserstoff, $C_1$-$C_8$-Alkyl oder mit $C_1$-$C_4$-Alkyl bis zu dreifach substituiertes Phenyl bedeuten und/oder eines $C_1$-$C_8$-Alkylesters der Methacryl- oder Acrylsäure, und

(b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl N-substituiertes Maleinimid, Vinylester von aliphatischen $C_2$-$C_8$-Carbonsäuren, Acrylamid und Vinylmethylether,

in Gegenwart des Pfropfcopolymerisates (A) polymerisiert.

**5.** Verfahren zur Herstellung der thermoplastischen Formmassen gemäß Anspruch 3, dadurch gekennzeichnet, daß man 5 bis 95 Gew.-% eines Pfropfcopolymerisats gemäß den Ansprüchen 1 oder 2 und 95 bis 5 Gew.-% eines Copolymerisats (C), erhältlich durch Polymerisation einer Mischung bestehend im wesentlichen aus

(c1) 50 bis 100 Gew.-% einer Styrolverbindung der allgemeinen Formel I und/oder eines $C_1$-$C_8$-Alkylesters der Methacryl- oder Acrylsäure,

(c2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit $C_1$-$C_4$-Alkyl, N-substituiertes Maleinimid, Vinylester von aliphatischen $C_1$-$C_8$-Carbonsäuren, Acrylamid und Vinylmethylether,

(c3) 0 bis 90 Gew.-% eines Polycarbonats und

(c4) 0 bis 100 Gew.-% übliche Zusatzstoffe, in an sich bekannter Weise mischt.

6. Verwendung der Pfropfcopolymerisate gemäß den Ansprüchen 1 oder 2 zur Herstellung von thermoplastischen Formmassen und Formkörpern.

7. Verwendung der thermoplastischen Formmassen gemäß Anspruch 3 zur Herstellung von Formkörpern.

8. Formkörper, erhältlich aus den Pfropfcopolymerisaten gemäß den Ansprüchen 1 oder 2 oder aus den thermoplastischen Formmassen gemäß Anspruch 3.

Europäisches Patentamt

# EUROPÄISCHER RECHERCHENBERICHT

Nummer der Anmeldung
EP 94 11 8850

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 260 558 (BAYER AG)<br>* Ansprüche *<br>* Beispiele * | 1-8 | C08F285/00<br>C08L51/00 |
| X | EP-A-0 246 537 (BAYER AG)<br>* Ansprüche *<br>* Beispiele * | 1-8 | |
| A | EP-A-0 326 041 (MITSUBISHI RAYON KK)<br>* Beispiele *<br>* Ansprüche * | 1-8 | |

RECHERCHIERTE SACHGEBIETE (Int.Cl.6)
C08F
C08L

Der vorliegende Recherchenbericht wurde für alle Patentansprüche erstellt

| Recherchenort | Abschlußdatum der Recherche | Prüfer |
|---|---|---|
| DEN HAAG | 21. März 1995 | Persson, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)